# EUROPÄISCHE PATENTSCHRIFT

(11) **EP 0 755 836 B1**
(45) Veröffentlichungstag und Bekanntmachung des Hinweises auf die Patenterteilung: **27.12.2000**
(21) Anmeldenummer: 96111174.7
(22) Anmeldetag: 11.07.1996
(51) Int. Cl.: B60T 11/20

(54) **Geberzylinder**
Mastercylinder
Maître-cylindre

(30) Priorität: 28.07.1995 DE 19527655
(43) Veröffentlichungstag der Anmeldung: 29.01.1997
(73) Patentinhaber: Continental Teves AG & Co. oHG, 60488 Frankfurt (DE)
(72) Erfinder: König, Harald, 61239 Obermörlen (DE); Kreh, Heinrich, 61197 Florstadt (DE); Jungmann, Udo, 64546 Mörfelden (DE)

(56) Entgegenhaltungen:
- EP-A- 0 067 100
- EP-A- 0 327 357
- DE-C- 2 026 756
- US-A- 5 187 934

## Beschreibung

Die vorliegende Erfindung befaßt sich mit einem Geberzylinder nach dem Oberbegriff des Anspruchs 1, insbesondere einem Tandemhauptzylinder für Kraftfahrzeugbremsanlagen.

Ein derartiger Zylinder ist aus der US-5,187,934 bekannt. Als nachteilig an diesem bekannten Geberzylinder ist anzusehen, daß dessen Deckel demontierbar ist und somit unsachgemäße Manipulationen möglich sind.

Aufgabe der vorliegenden Erfindung ist es daher, einen gattungsgemäßen Geberzylinder so zu verschließen, daß eine Demontage unmöglich wird, um eine unsachgemäße Manipulation an diesem sicherheitsrelevanten Bauteil zu verhindern.

Gelöst wird diese Aufgabe durch die in den Patentansprüchen angegebenen Maßnahmen. Dazu ist erfindungsgemäß vorgesehen, das Führungselement axial beweglich anzuordnen. Dies ermöglicht es, den Deckel ortsfest zu sichern, ohne dabei auf die genaue Lage des Führungselements Rücksicht nehmen zu müssen. Eine Fixierung des axial beweglich angeordneten Führungselements an einem Anschlag wird durch die Anordnung eines Federelements erreicht. Dieses kann beispielsweise zwischen Deckel und Führungselement oder zwischen Führungselement und einer Stufe der Bohrung oder anderweitig gehäusefest abgestützt sein. Auf diese Weise wird eine unerwünschte Axialbewegung des Führungselements im Betrieb verhindert und dessen Lage in der Ruheposition fixiert. Auf diese Weise wird ein geringer Leerweg des Kolbens im Zylinder erreicht. Dies ist der Weg des Kolbens, der bis zum Überfahren einer Nachlaufbohrung zurückgelegt wird.

Sind Bohrungsdichtelemente vorgesehen, die verschiedene Durchmesser aufweisen, so kann eine weitgehende axiale Fixierung des Führungselements auch bei Betätigung des Geberzylinders erreicht werden. Dabei bewegen sich Primär- und Sekundärkolben und bauen in den entsprechenden Druckräumen einen nahezu gleichen Druck auf. Bedingt durch Reibungsverluste des Kolbens an den Kolbendichtelementen liegt der Druck im Sekundärdruckraum in der Druckaufbauphase im allgemeinen niedriger als derjenige im Primärdruckraum. Durch die verschieden großen Durchmesser der Bohrungsdichtelemente wirken die Drücke auf verschieden große wirksame Flächen, wodurch eine resultierende Kraft auf das Führungselement wirkt, die dieses gegen seinen Anschlag drückt. Das Führungselement bleibt somit immer in einer fixierten Position, was einen minimalen Leerweg garantiert. Vorteilhafterweise kann in diesem Fall auf ein das Führungselement vorspannendes Federelement verzichtet werden.

Beträgt der Durchmesser des sekundärdruckraumseitigen Bohrungsdichtelements etwa das 1,15fache des Durchmessers des primärdruckraumseitigen Bohrungsdichtelements, so kann trotz einer relativ geringen Zunahme des Durchmessers dennoch ein bis zu 30 % höherer Druck im Primärdruckraum zugelassen werden, ohne daß es zu einer ungewollten Verschiebung des Führungselements kommt. Bei größerem Durchmesserunterschied kann ein entsprechend größerer Druckunterschied toleriert werden.

Wird das Führungselement aus zwei Teilelementen hergestellt, so kann es ohne großen Aufwand aus Kunststoff gefertigt werden. Vorteilhafterweise ist hier Duroplast einsetzbar, da bei einer zweiteiligen Ausführung des Führungselements keine Hinterschnitte auftauchen, die entformt werden müßten. Es ist hier auch möglich, ein Teilelement mit schwierig entformbaren Hinterschnitten zu versehen, und dieses konventionell aus Metall oder einem anderen, leicht bearbeitbaren Werkstoff herzustellen, während lediglich das andere, einfach herstellbare Teilelement aus Kunststoff besteht.

Es ist weiterhin möglich, eines der Teilelemente im wesentlichen aus Duroplast herzustellen und lediglich Teilbereiche aus einem anderen Kunststoff. Die Teilbereiche können dabei Hinterschnitte sein, die beispielsweise zum Befestigen eines Dichtelements dienen, und aus einem beispielsweise an den Duroplastkörper angespreizten Thermoplastmaterial bestehen.

Vorteilhafterweise ist der Geberzylinder mit einem sogenannten Plungerkolben, d.h. einem Hohlkolben mit radialen Nachlaufbohrungen versehen. Dieser Kolben ist kostengünstig herstellbar und erfordert dennoch in Kombination mit den entsprechenden Führungs- und Dichtelementen die Anforderungen, die an einen Hauptzylinder in einer Kraftfahrzeugbremsanlage gestellt werden. Insbesondere eignet er sich auch für geregelte Bremssysteme, die mit ABS, ASR, einer Einrichtung zur Regelung der Fahrstabilität, einer Einrichtung zum fahrerunabhängigen Betätigen der Bremsanlage oder anderen in modernen Kraftfahrzeugbremsanlagen zum Einsatz kommenden Einrichtungen verwendbar ist.

Weitere Vorteile der vorliegenden Erfindung ergeben sich aus der nachfolgenden Beschreibung anhand zweier Abbildungen.

Dabei zeigen
- Fig. 1: einen erfindungsgemäßen Geberzylinder
- Fig. 2: ein Druck-Weg-Diagramm zur Darstellung des Differenzdrucks zwischen Primär- und Sekundär-Druckraum.

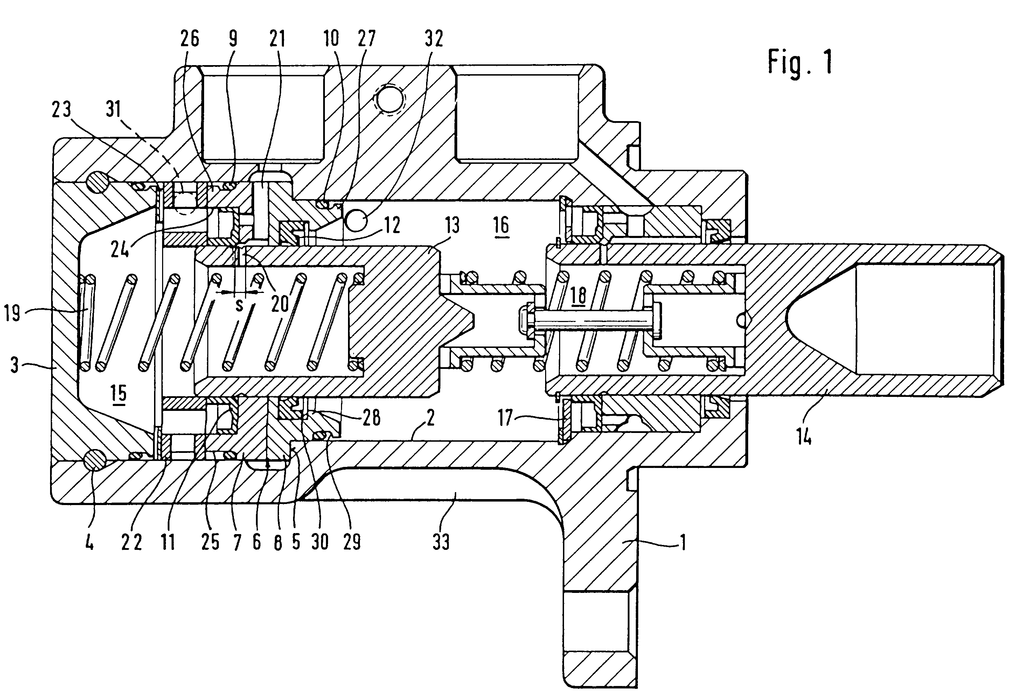

Fig. 1 zeigt einen Geberzylinder, in dessen Gehäuse 1 eine gestufte Bohrung 2 angeordnet ist, die von einem Deckel 3 verschlossen ist. Der Deckel 3 ist mittels eines Drahts 4 unlösbar mit dem Gehäuse 1 verbunden.

An einer Stufe 5 der Bohrung 2 liegt ein Führungselement 6 an, welches im vorliegenden Ausführungsbeispiel aus zwei Teilelementen 7,8 besteht. Die Teilelemente 7,8 sind mittels je eines Bohrungsdichtelements 9,10 gegen die Bohrung 2 und mittels je eines Kolbendichtelements 11,12 gegen einen Sekundärkolben 13 abgedichtet. Der Sekundärkolben 13 begrenzt einerseits einen sich in der Bohrung 2 bis zum Deckel 3 erstreckenden Sekundärdruckraum 15 und andererseits einen Primärdruckraum 16, der sich in der Bohrung 2 in entgegengesetzter Richtung erstreckt und andererseits von einem Primärkolben 14 begrenzt wird. Der Primärkolben 14 ist ebenfalls abgedichtet im Gehäuse 1 geführt und weist einen gehäusefesten Anschlag 17 auf. Zwischen Primärkolben 14 und Sekundärkolben 13 ist ein an sich bekanntes Federpaket 18 angeordnet, welches die Kolben 13,14 in der unbetätigten Stellung des Geberzylinders im Zusammenwirken mit einer zwischen dem Sekundärkolben 13 und dem Deckel 3 angeordneten Feder 19 in ihre Ausgangsstellung bringt. Im Sekundärkolben 13 ist mindestens eine Nachlaufbohrung 20 angeordnet, die den Sekundärdruckraum 15 im zurückgestellten Zustand des Sekundärkolbens 13 mit einem im Führungselement 6 ausgebildeten Nachlaufraum 21 verbindet. Dieser Nachlaufraum 21 ist miteinem nicht dargestellten, drucklosen Nachlaufbehälter verbunden. Zwischen dem Führungselement 6 und dem Deckel 3 ist ein Ringelement 22 sowie ein Federelement 23 angeordnet.

Zur Betätigung des Geberzylinders wird der Primärkolben 14 aus seiner dargestellten Ruheposition - in der Abbildung nach links - verschoben. Diese Bewegung wird durch das Federpaket 18 auf den Sekundärkolben 13 übertragen, welcher sich ebenfalls nach links bewegt. Sobald die Nachlaufbohrung 20 vom Kolbendichtelement 11 bedeckt ist, d.h. sobald der Sekundärkolben 13 den Leerweg s zurückgelegt hat, erhöht sich der Druck im Sekundärdruckraum 15. Entsprechendes gilt für den Primärdruckraum 16. Aufgrund des Reibungswiderstands, den der Sekundärkolben 13 an den Kolbendichtelementen 11 und 12 erfährt, liegt der Druck im Sekundärdruckraum 15 niedriger als derjenige im Primärdruckraum 16. Da das sekundärdruckraumseitige Bohrungsdichtelement 9 einen größeren Durchmesser aufweist als das primärdruckraumseitige Bohrungsdichtelement 10 ergeben sich unterschiedlich große Flächen, auf die die Drücke in den Druckräumen 15 bzw. 16 wirken. Es handelt sich dabei um die Querschnittsflächen der gestuften Bohrung 2 auf der Höhe der entsprechenden Bohrungsdichtelemente 9 bzw. 10. Der Radius des Bohrungsdichtelements 9 ist im Ausführungsbeispiel um das 1,15fache größer gewählt als derjenige des Bohrungsdichtelements 10. Dies bedeutet, daß die resultierende Kraft auf das Führungselement 6 entgegen der Betätigungsrichtung wirkt und somit das Führungselement 6 gegen seinen Anschlag an der Stufe 5 preßt. Der Leerweg s wird somit nicht durch ein ungewolltes Verschieben des Führungselements 6 (in der Abbildung nach links) vergrößert. Die entsprechende Wirkung tritt bei den gewählten Maßen auch dann noch auf, wenn der Druck im Primärdruckraum 14 denjenigen im Sekundärdruckraum 15 um bis zu 30 % überschreitet. Es liegt selbstverständlich im Können des Fachmanns, die entsprechenden Radien der Bohrungsdichtelemente 9 bzw. 10 und somit der gestuften Bohrung 2 derart anzupassen, daß auch größere Druckunterschiede ohne negativen Einfluß auf den Leerweg bleiben.

Das Federelement 23 ist in axialer Richtung federnd ausgebildet, so daß eine Axialbewegung des Führungselements 6 auch im montierten Zustand des Deckels 3 möglich ist. Die beiden Teilelemente 7 und 8 des Führungselements 6 stoßen im Bereich des Nachlaufraums 21 aneinander, so daß diese durch einen axialen Formkern bei der Herstellung des sekundärdruckraumseitigen Teilelements 7 ausgeformt werden kann. Auch das sekundärdruckraumseitige Kolbendichtelement 11 ist in einer axial ausformbaren Nut 24 des Teilelements 7 angeordnet. Auch das Bohrungsdichtelement 9 kann in einer axial umlaufenden Nut 25 angeordnet sein, da es durch das Ringelement 22 im eingebauten Zustand fixiert ist. Das Teilelement 7 kann in diesem Fall problemlos aus Duroplast-Material hergestellt werden. Alternativ besteht die Möglichkeit, an die umlaufende Nut 25 einen umlaufenden Steg 26, beispielsweise aus einem Thermoplast-Material bestehend, anzuspritzen, welcher zur Fixierung des Bohrungsdichtelements 9 dient. Entsprechende Stege 27,28 sind auch am Teilelement 8 vorgesehen. Die Stege 27,28 bilden Hinterschnitte 29,30, an denen das Bohrungsdichtelement 10 bzw. das Kolbendichtelement 12 am Teilelement 8 befestigt sind. Auch hier ist es wiederum möglich, das Teilelement 8 aus Metall herzustellen, was eine problemlose Darstellung der Hinterschnitte 29,30 ermöglicht, oder das Teilelement 8 aus einem Kunststoff herzustellen und die Stege 27,28 - beispielsweise nach dessen Entformung - anzuspritzen. Auch hier kann wieder im wesentlichen ein Duroplast-Material verwendet werden, während nur die Stege 27,28 aus Thermoplast bzw. einem anderen geeigneten Material bestehen.

Die Druckräume 15,16 sind über Druckanschlüsse 31,32 mit nicht dargestellten Radbremszylindern eines Kraftfahrzeugs verbunden. Ein axialer Steg 33 dient zur Stabilisierung des Gehäuses 1.

Erfindungsgemäß ist somit vorgesehen, im Bereich des Führungselements 6 des Sekundärkolbens 13 Kolbendichtelemente 11,12 mit unterschiedlichen Durchmessern anzuordnen. Dabei weist das Bohrungsdichtelement 9, das gegen die Sekundärdruckkammer 15 abdichtet, den größeren Durchmesser auf. Durch den Reibungsverlust der beiden Kolbendichtelemente 11,12 auf den Sekundärkolben 13 wird bei einer Betätigung üblicherweise beim Vorwärtshub im Sekundärdruckraum 15 ein geringerer Druck erzielt als im Primärdruckraum 16. Dies liegt daran, daß der der Kolbendichtelemente kleiner als 1 ist. Eine Bewegung des Führungselements 6 in Richtung des Deckels 3, die durch die axiale Beweglichkeit des Führungselements 6 möglich ist, wird durch die resultierende Kraft auf das Führungselement 6, hervorgerufen durch die unterschiedlichen wirksamen Flächen an den Bohrungsdichtelementen 9 bzw. 10, verhindert. Eine Bewegung des Führungselements 6 würde bewirken, daß ein gewisser Verlust des aus den Druckräumen 15,16 durch die Druckanschlüsse 31,32 ausgebrachten Volumens auftritt, da die Ausschiebung des Volumens unter Druck im Primärdruckraum zu einer Entfernung des Führungselements 6 führen würde, was einer Volumenaufnahme im Primärdruckraum 16 gleichkäme. Bei der erfindungsgemäßen Durchmesserverkleinerung des Bohrungsdichtelements 10 gegenüber dem Bohrungsdichtelement 9 bewirkt der höhere Druck im Primärdruckraum 16 durch die kleinere Fläche gegenüber dem kleineren Druck im Sekundärdruckraum 15 mit der durch das Bohrungsdichtelement 9 definierten wesentlich größeren Fläche keine Verschiebung, da die resultierende Kraft auf das Führungselement 6 der Betätigungsrichtung des Sekundärkolbens 13 entgegengerichtet ist. Beim Rückhub des Sekundärkolbens 13 überwiegt der Druck im Sekundärdruckraum 15, da sich die Vorzeichen des Reibungsverlusts an den Kolbendichtelementen 11,12 umkehren, so daß dann das Führungselement 6 ohnehin gegen die Stufe 5 gedrückt wird. Eine Bewegung des Führungselements 6 wird somit generell vermieden, was den Vorteil hat, daß weder ein Volumenverlust für den Primärdruckraum 16, noch ein möglicher Verschleiß der Bohrungsdichtelemente 9,10 durch eine Bewegung des Führungselements 6 hervorgerufen wird. Die Bohrungsdichtelemente 9,10 werden nur statisch, nicht dynamisch belastet.

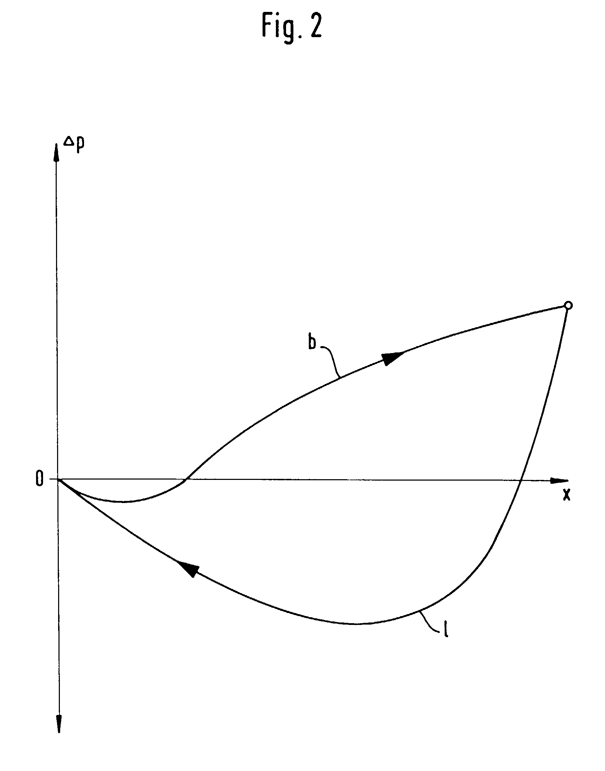

In Fig. 2 ist die Differenzdruckkurve eines gefesselten Tandemhauptzylinders dargestellt. Dabei ist auf der X-Achse der zurückgelegte Kolbenweg und auf der Y-Achse der Differenzdruck Δp aufgetragen. Ist Δp größer als 0, so überwiegt der Druck im Primärdruckraum 16, ist Δp negativ, so überwiegt der Druck im Sekundärdruckraum 15. Die obere Kurve b zeigt den Differenzdruckverlauf beim Betätigen, während die untere Kurve 1 den Differenzdruckverlauf beim Lösen des Geberzylinders darstellt. Man erkennt, daß im größten Bereich der Kurve 1 der Wert von Δp negativ ist. Dies entspricht einer in Richtung der Stufe 5 weisenden Kraft auf das Führungselement 6. Beim Betätigen dagegen liegt die Differenzdruckkurve größtenteils im positiven Bereich, was einer Verschiebung des Führungselements 6 in Richtung des Deckels 3 entspricht. Diese Verschiebung wird - wie oben beschrieben - durch die unterschiedlichen Durchmesser der Bohrungsdichtelemente 9,10 vermieden.

## Patentansprüche

1. Geberzylinder mit einer von einem Deckel (3) verschlossenen gestuften Bohrung (2), in der ein Primärkolben (14) und ein Sekundärkolben (13) einen Primärdruckraum (16) und einen Sekundärdruckraum (15) begrenzen und der Sekundärkolben (13) von einem in der Bohrung (2) angeordneten, am Deckel (3) abgestützten Führungselement (6) geführt wird, dadurch **gekennzeichnet**, daß das Führungselement (6) axial beweglich angeordnet ist.

2. Geberzylinder nach Anspruch 1, dadurch **gekennzeichnet**, daß das Führungselement (6) mittels eines Federelements (23) vorgespannt ist.

3. Geberzylinder nach einem der Ansprüche 1 oder 2, dadurch **gekennzeichnet**, daß das Führungselement (6) Kolbendichtelemente (11,12) trägt, die gegen den Sekundärkolben (13) abdichten, daß es dem Primärdruckraum (16) bzw. dem Sekundärdruckraum (15) zugeordnete Bohrungsdichtelemente (10,9) trägt, die gegen die Bohrung (2) abdichten und daß das dem Primärdruckraum (14) zugeordnete Bohrungsdichtelement (10) einen kleineren Durchmesser aufweist, als das dem Sekundärdruckraum (15) zugeordnete Bohrungsdichtelement (9).

4. Geberzylinder nach Anspruch 3, dadurch **gekennzeichnet**, daß der Durchmesser des sekundärdruckraumseitigen Bohrungsdichtelements (9) etwa das 1,15fache des Durchmessers des primärdruckraumseitigen Bohrungsdichtelements (10) beträgt.

5. Geberzylinder nach einem der vorhergehenden Ansprüche, dadurch **gekennzeichnet**, daß das Führungselement (6) aus zwei Teilelementen (7,8) besteht.

6. Geberzylinder nach einem der vorhergehenden Ansprüche, dadurch **gekennzeichnet**, daß das Führungselement (6) aus einem primärdruckraumseitigen und einem sekundärdruckraumseitigen Teilelement (7,8) besteht, welche in einer Ebene senkrecht zur Achse der Bohrung (2) aneinander anliegen.

7. Geberzylinder nach einem der Ansprüche 5 oder 6, dadurch **gekennzeichnet**, daß zumindest eines der Teilelemente (7,8) aus Kunststoff besteht.

8. Geberzylinder nach einem der vorhergehenden Ansprüche, dadurch **gekennzeichnet**, daß zumindest eines der Teilelemente (7,8) im wesentlichen aus Duroplast und in einem oder mehreren Teilbereichen aus einem anderen Kunststoff besteht.

9. Geberzylinder nach einem der vorhergehenden Ansprüche, dadurch **gekennzeichnet**, daß der Sekundärkolben (13) ein Hohlkolben mit radialen Nachlaufbohrungen (20) ist.

10. Geberzylinder nach einem der vorhergehenden Ansprüche, dadurch **gekennzeichnet**, daß der Geberzylinder ein Hauptzylinder einer Kraftfahrzeugbremsanlage ist.

## Claims

1. Master cylinder including a stepped bore (2) closed by a cover (3) in which a primary piston (14) and a secondary piston (13) define a primary pressure chamber (16) and a secondary pressure chamber (15), and the secondary piston (13) is guided by a guide element (6) that is arranged in the bore (2) and supported on the cover (3),
**characterized** in that the guide element (6) is axially movably arranged.

2. Master cylinder as claimed in claim 1,
**characterized** in that the guide element (6) is preloaded by means of a spring element (23).

3. Master cylinder as claimed in any one of claims 1 or 2,
**characterized** in that the guide element (6) carries piston sealing elements (11, 12) which seal relative to the secondary piston (13), that it carries bore sealing elements (10, 9) associated with the primary pressure chamber (16) or the secondary pressure chamber (15) and sealing relative to the bore (2), and in that the bore sealing element (10) associated with the primary pressure chamber (14) has a smaller diameter than the bore sealing element (9) associated with the secondary pressure chamber (15).

4. Master cylinder as claimed in claim 3,
**characterized** in that the diameter of the bore sealing element (9) close to the secondary pressure chamber amounts to roughly 1.15 times the diameter of the bore sealing element (10) close to the primary pressure chamber.

5. Master cylinder as claimed in any one of the preceding claims,
**characterized** in that the guide element (6) is made up of two partial elements (7, 8).

6. Master cylinder as claimed in any one of the preceding claims,
**characterized** in that the guide element (6) is composed of a partial element (7, 8) close to the primary pressure chamber and one close to the secondary pressure chamber, the said elements abutting each other in a plane vertical to the axis of the bore (2).

7. Master cylinder as claimed in any one of claims 5 or 6,
**characterized** in that at least one of the partial elements (7, 8) is made of plastic.

8. Master cylinder as claimed in any one of the preceding claims,
**characterized** in that at least one of the partial elements (7, 8) is generally made of duroplastic and is made of another plastic in one or more partial areas.

9. Master cylinder as claimed in any one of the preceding claims,
**characterized** in that the secondary piston (13) is a hollow piston with radial supply bores (20).

10. Master cylinder as claimed in any one of the preceding claims,
**characterized** in that the master cylinder is a master cylinder of an automotive vehicle brake system.

## Revendications

1. Maître-cylindre, comportant un perçage étagé (2), fermé par un couvercle (3) et dans lequel un piston primaire (14) et un piston secondaire (13) délimitent une chambre de pression primaire (16) et une chambre de pression secondaire (15), et le piston secondaire (13) est guidé par un élément de guidage (6) disposé dans le perçage (2) et s'appuyant contre le couvercle (3), **caractérisé** en ce que l'élément de guidage (6) est disposé à déplacement axial.

2. Maître-cylindre selon la revendication 1, **caractérisé** en ce que l'élément de guidage (6) est précontraint au moyen d'un élément élastique (23).

3. Maître-cylindre selon la revendication 1 ou 2, **caractérisé** en ce que l'élément de guidage (6) porte des éléments (11, 12) de garniture de piston, qui assurent l'étanchéité vis-à-vis du piston secondaire (13), en ce qu'il porte des éléments (10, 9) de garniture de perçage respectivement associés à la chambre de pression primaire (16) et à la chambre de pression secondaire (15), qui assurent l'étanchéité vis-à-vis du perçage (2), et en ce que l'élément (10) de garniture de perçage associé à la chambre de pression primaire (16) présente un plus petit diamètre que l'élément (9) de garniture de perçage associé à la chambre de pression secondaire (15).

4. Maître-cylindre selon la revendication 3, **caractérisé** en ce que le diamètre de l'élément (9) de garniture de perçage associé à la chambre de pression secondaire est égal à environ 1,15 fois le diamètre de l'élément (10) de garniture de perçage associé à la chambre de pression primaire.

5. Maître-cylindre selon une des revendications précédentes, **caractérisé** en ce que l'élément de guidage (6) est constitué de deux éléments partiels (7, 8).

6. Maître-cylindre selon une des revendications précédentes, **caractérisé** en ce que l'élément de guidage (6) est constitué d'un élément partiel (8) côté chambre de pression primaire et d'un élément partiel (7) côté chambre de pression secondaire, qui s'appliquent l'un contre l'autre dans un plan perpendiculaire à l'axe du perçage (2).

7. Maître-cylindre selon la revendication 5 ou 6, **caractérisé** en ce qu'au moins un des éléments partiels (7, 8) est réalisé en matière plastique.

8. Maître-cylindre selon une des revendications précédentes, **caractérisé** en ce qu'au moins un des éléments partiels (7, 8) est réalisé pour l'essentiel en matériau thermodurcissable, et dans une ou plusieurs régions partielles en un autre matériau plastique.

9. Maître-cylindre selon une des revendications précédentes, **caractérisé** en ce que le piston secondaire (13) est un piston creux doté de perçages de poursuite radiaux (20).

10. Maître-cylindre selon une des revendications précédentes, **caractérisé** en ce que le maître-cylindre est un maître-cylindre d'un système de freinage de véhicule automobile.
